# EUROPÄISCHE PATENTSCHRIFT

(11) **EP 1 861 943 B1**
(45) Veröffentlichungstag und Bekanntmachung des Hinweises auf die Patenterteilung: **02.11.2011**
(21) Anmeldenummer: 06707561.4
(22) Anmeldetag: 15.03.2006
(51) Int. Cl.: H04L 1/00, H04L 1/16, H04L 1/20, H04L 1/24

(54) **VERFAHREN ZUR BESTIMMUNG EINER FEHLERRATE UND ENTSPRECHENDES TESTGERÄT**
METHOD FOR DETERMINING AN ERROR RATE AND CORRESPONDING TEST DEVICE
PROCEDE POUR DETERMINER UN TAUX D'ERREUR ET APPAREIL D'ESSAI CORRESPONDANT

(30) Priorität: 21.03.2005 DE 102005012978; 11.04.2005 DE 102005016585
(43) Veröffentlichungstag der Anmeldung: 05.12.2007
(73) Patentinhaber: Rohde & Schwarz GmbH & Co. KG, 81671 München (DE)
(72) Erfinder: BRAUN, Thomas, 80686 München (DE); BÄDER, Uwe, 85521 Ottobrunn (DE); SEEBACHER, Pirmin, 83022 Rosenheim (DE)
(74) Vertreter: Beder, Jens
(86) Internationale Anmeldenummer: PCT/EP2006/002368
(87) Internationale Veröffentlichungsnummer: WO 2006/099980

(56) Entgegenhaltungen:
- EP-A- 1 130 834
- WO-A-03/001681
- US-A1- 2003 224 836
- US-A1- 2005 022 089

## Beschreibung

Die Erfindung betrifft ein Verfahren zur Bestimmung einer Fehlerrate bei einer Datenübertragung in einem Mobilfunksystem sowie ein Testgerät.

In einem Mobilfunksystem der dritten Generation werden Daten paketweise übertragen. Der physikalische Übertragungskanal ist hierzu in aufeinanderfolgende Signalrahmen eingeteilt, die als Unterteilung wiederum Zeitschlitze aufweisen. Durch diese Zeitschlitze wird jeweils ein Signalrahmen in eine festgelegte Anzahl von Übertragungsblöcken unterteilt. Jeweils mehrere, sich entsprechende Übertragungsblöcke in aufeinanderfolgenden Signalrahmen werden dabei zur Übertragung eines Datenteilstroms genutzt. Jeder Übertragungsblock eines Signalrahmens überträgt daher einen Anteil an den insgesamt übertragenen Daten. Damit können mehrere Datenteilströme in sog. nebenläufigen Prozessen zwischen der Basisstation und den mit ihr kommunizierenden Mobilfunkendgeräten übertragen werden.

Um festzustellen, ob die Übertragung eines einzelnen Übertragungsblocks fehlerfrei war, wird von dem den Übertragungsblock empfangenden Teilnehmer ein Bestätigungssignal zurückgesendet. Das Bestätigungssignal ist ein positives Bestätigungssignal für den Fall des korrekten Empfangens bzw. ein negatives Bestätigungssignal für den Fall eines nichtkorrekten Empfangens. Zum Testen von Geräten des Mobilfunksystems werden diese Bestätigungssignale erfasst und aus dem Verhältnis der negativen Bestätigungssignale zu der Gesamtanzahl der Bestätigungssignale eine Fehlerrate ermittelt. Bei der bekannten Durchführung des Verfahrens wie er im 3GPP-Standard beschrieben ist, wird hierzu ein festes Transportformat verwendet, bei dem also alle Datenteilströme mit einem einheitlichen Satz von Parametern gesendet werden. Dies hat den Nachteil, dass zum Ermitteln einer Fehlerrate, die bei einem abweichenden Transportformat auftritt, ein vollständiger Durchlauf dieser Testschleife abgewartet werden muss. Zudem ist das Testverfahren statisch, da das angesprochene Mobilfunkgerät in aufeinander folgenden Übertragungsblöcken jeweils ein mit denselben Parametern gesendetes Sendesignal empfangen und entschlüsseln muss. Zusätzliche Fehler, die in einem dynamischen Prozess, also mit wechselnden Transportformaten auftreten, werden somit nicht erkannt.

Die Druckschrift WO 03/001681 A2 zeigt ein Verfahren zum Bestimmen einer Fehlerrate bei einer Übertragung von Daten in einem Mobilfunksystem mit zumindest einem Übertragungskanal, in dem mehrere Datenteilströme übertragen werden. Es werden mehrere Datenteilströme durch eine Signalgeneratoreinheit erzeugt und für jeden Datenteilstrom individuell ein Transportformat festgelegt. Die Datenteilströme werden jeweils in einer Anzahl zusammengehörender Übertragungsblöcke durch ein Testgerät an ein zu testendes Gerät gesendet. Durch das zu testende Gerät werden die Übertragungsblöcke empfangen und ausgewertet und zudem für jeden Übertragungsblock ein positives oder negatives Bestätigungssignal zurückgesendet.

Es ist Aufgabe der Erfindung, ein Verfahren sowie ein Testgerät zu schaffen, bei dem das gleichzeitige Ermitteln von Fehlerraten für unterschiedliche Transportformate möglich ist.

Die Aufgabe wird durch das erfindungsgemäße Verfahren nach Anspruch 1, sowie durch das erfindungsgemäße Testgerät nach Anspruch 9 gelöst.

Bei dem erfindungsgemäßen Verfahren werden durch das Testgerät zunächst mehrere Datenteilströme durch eine Signalgeneratoreinheit erzeugt. Für jeden dieser Datenteilströme wird dann durch eine Konfigurationseinheit individuell ein Satz von Sendeparametern festgelegt. Jeder Satz Sendeparameter definiert dabei ein bestimmtes Transportformat, mit dem der jeweilige Datenteilstrom gesendet wird. Der Datenteilstrom wird jeweils in einer Anzahl zusaaQnengehdrender Übertragungsblöcke durch eine Sende-/Empfangseinheit des Testgeräts gesendet. Das zu testende Gerät empfängt die Ü'bertragungsblöcke und wertet sie aus. Bei der Auswertung werden die in den Übertragungablöcken übertragenen Daten auf korrekte Übertragung überprüft und dementsprechend bei korrekter Übertragung ein positives Bestätigungssignal bzw. bei nicht korrekter Übertragung ein negatives Bestätigungssignal zurückgesendet. Das Testgerät empfängt die von dem zu testenden Gerät zurückgesendeten Bestätigungssignale und ermittelt hieraus eine Fehlerrate des zu testenden Geräts.

Bei dem erfindungsgemäßen Verfahren ist es vorteilhaft, dass das zu testende Gerät zusätzlich belastet wird, indem von einem Übertragungsblock zum nächsten Übertragungsblock das Transportformat wechseln kann. Dadurch wird einerseits die Belastung für das Mobilfunkgerät erhöht, so dass auch bei einer gemeinsamen Auswertung aller Bestätigungssignale über alle Datenteilströme ein realistischer Wert für eine Fehlerrate ermittelt wird, andererseits ist es möglich, für jeden Datenteilstrom, der mit einem bestimmten Transportformat, also einem festgelegten Satz von Parametern gesendet wird, eine individuelle Fehlerrate zu ermitteln.

Die Unteransprüche betreffen vorteilhafte Weiterbildungen des erfindungsgemäßen Verfahrens sowie des erfindungsgemäßen Testgeräts.

Insbesondere ist es vorteilhaft, zu jedem Datenteilstrom durch getrennte Auswerteblöcke einer Auswerteeinheit individuell eine Fehlerrate zu ermitteln. Die individuelle Fehlerrate gibt dabei Aufschluss, ob sich beispielsweise eine Häufung von Erkennungsfehlern in einen systematischen Zusammenhang, beispielsweise mit einer gewählten Modulationsart, bringen lässt.

Weiterhin ist es vorteilhaft, für jeden der Datenteilströme die maximale Anzahl der Wiederholungen des Übertragungsblocks festzulegen, die nach dem Zurücksenden eines negativen Bestätigungssignals erneut gesendet werden, bevor der Übertragungsblock verworden wird. Somit kann für jeden Datenteilstrom auch eine Sequenz einer Redundanzversion separat festgelegt werden. Damit lassen sich Einflüsse ausschließen, die sich durch das wiederholte Senden des selben Dateninhalts ergeben.

Ein weiterer Vorteil ist es, durch einen Konfigurationsblock festzulegen, welche Übertragungsblöcke wie oft wiederholt übertragen werden, wobei diese Wiederholung ebenso wie die verwendete Redundanzversion unabhängig von einem Bestätigungssignal festgelegt wird.

Ein bevorzugtes Ausführungsbeispiel des erfindungsgemäßen Verfahrens sowie des Testgeräts sind in der Zeichnung dargestellt und werden in der nachfolgenden Beschreibung näher erläutert. Es zeigen:
- Fig. 1: eine schematische Darstellung der Übertragung von Daten in einem Mobilfunksystem;
- Fig. 2: eine schematische Darstellung eines Übertragungskanals eines Mobilfunksystems und
- Fig. 3: ein Blockschaltbild eines erfindungsgemäßen Testgeräts.

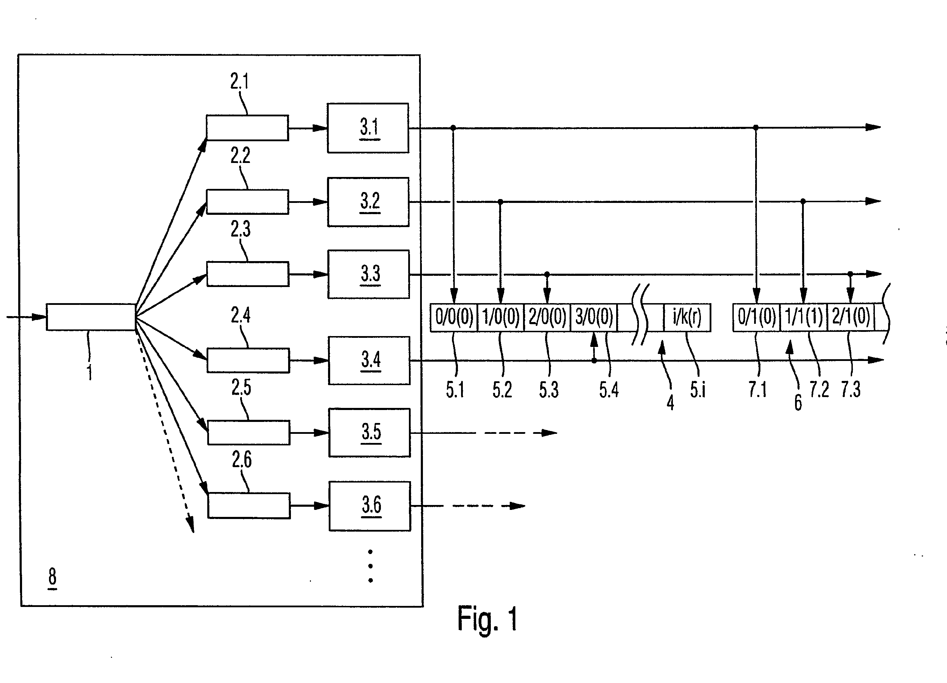

In der Fig. 1 ist stark vereinfacht dargestellt, wie in einem Mobilfunksystem der dritten Generation Daten paketweise übertragen werden. Ein zu übertragender Datenstrom 1 wird zunächst in Datenteilströme 2.1 bis 2.6 zerlegt. Wie es in der Fig. 1 durch den gestrichelt dargestellten Pfeil angedeutet ist, können in Abhängigkeit von dem gewählten Verfahren auch mehr als die dargestellten 6 Datenteilströme verwendet werden. Die so entstandenen 6 Datenteilströme 2.1 bis 2.6 werden unabhängig voneinander durch Kodier- und Modulationsblöcke 3.1 bis 3.6 aufbereitet und durch eine entsprechende Sendeeinheit gesendet. Das Sendesignal selbst besteht aus nacheinander gesendeten Signalrahmen 4, 6. Diese Signalrahmen 4, 6 weisen eine vorbestimmte zeitliche Länge auf, wobei jeder Signalrahmen 4, 6 einem Zeitraster entsprechend in einzelne Übertragungsblöcke 5.1, 5.2, bis 5.i bzw. 7.1, 7.2, 7.3, ... unterteilt ist. Die einzelnen Signalrahmen 4, 6 weisen eine korrespondierende Anzahl von Übertragungsblöcken 5.1 bis 5.1', 7.1 bis 7.1' auf.

In den einzelnen Signalrahmen 4, 6 werden bestimmte Übertragungsblöcke dabei mit dem zu übertragenden Signal eines bestimmten Prozesses besetzt. Die Übertragungsblöcke eines Prozesses haben einen zeitlichen Mindestabstand. In der Fig. 1 ist dargestellt, dass beispielsweise jeweils entsprechend angeordnete Übertragungsblöcke zu einem Prozess gehören. So wird in den jeweils ersten Übertragungsblöcken 5.1 und 7.1 des Signalrahmens 4 bzw. 6 jeweils ein Teil des Datenteilstroms 2.1 übertragen. Auf die gleiche Weise gehören die jeweils zweiten Übertragungsblöcke 5.2 und 7.2 zusammen, wobei in diesen zweiten Übertragungsblöcken jeweils ein Teil der Daten des Datenteilsstroms 2.2 übertragen wird.

Auf diese Weise erstrecken sich die einzeln Prozesse über mehrere aufeinander folgende Signalrahmen 4, 6 und beanspruchen dabei jeweils nur einen bestimmten Zeitschlitz innerhalb des Signalrahmens 4, 6. Es entstehen mehrere sog. nebenläufige Prozesse. Das Erzeugen der mehreren Datenteilströme 2.1 bis 2.6 sowie das Aufbereiten durch die Kodier- und Modulationsblöcke 3.1 bis 3.6 erfolgt in einer Signalgeneratoreinheit 8 des erfindungsgemäßen Testgerätes. Dabei können die einzelnen Signalgeneratoren 3.1 bis 3.6 zur Aufbereitung der Datenteilströme 2.1 bis 2.6 unterschiedliche Transportformate verwenden. In einem Transportformat sind alle zur Übertragung von Daten erforderliche Parameter zusammengefasst. So können beispielsweise die Modulationsart, die Datenrate, die Leistung, usw. bestimmt werden.

Durch die Verwendung einzelner Kodier- und Modulationsblöcke 3.1 bis 3.6 können daher für nebenläufige Prozesse jeweils individuelle Parametersätze verwendet werden. Dem entsprechend muss das zu testende Gerät, an das die Signalrahmen 4, 6 übertragen werden, zwischen den einzelnen Übertragungsblöcken 5.1, 5.2, 5.3 usw. auf den veränderten Parametersatz eingestellt werden und z.B. ein anderes Demodulationsverfahren verwenden.

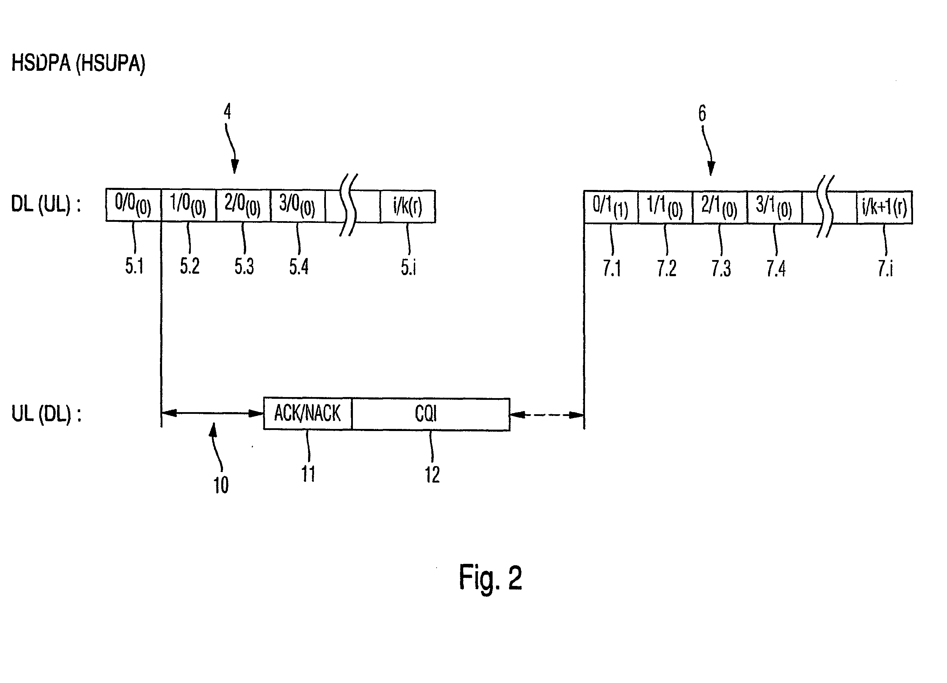

In der Fig. 2 ist noch einmal ein vereinfachtes Schema eines solchen Übertragungsverfahrens zum Ermitteln der Fehlerrate dargestellt. Ein solches Übertragungsverfahren wird auch als HSDPA bezeichnet (High Speed Downlink Packet Access). Das in der Fig. 2 dargestellte Übertragungsverfahren HSDPA besteht aus einer Kontrollinformation und einem Datenstrom im Downlink DL und einer Kontrollinformation im Uplink UL. Das Verfahren ist jedoch an diese Übertragungsrichtung nicht gebunden und kann ebenso gut in einem High Speed Uplink Packet Access (HSUPA) angewendet werden.

Wie es bereits beschrieben wurde, wird in einem Signalrahmen 4 zunächst ein erster Übertragungsblock 5.1 gesendet. Dieser Übertragungsblock ist in der Fig. 2 mit der Kennung 0/0_{0.} bezeichnet. Dabei bedeutet die erste Ziffer die Nummer des jeweiligen Übertragungsblocks in dem Signalrahmen 4. Die zweite Stelle kennzeichnet den Signalrahmen selbst und die dritte Stelle gibt an, die wievielte Wiederholung einer Übertragung desselben Übertragungsblocks stattgefunden hat.

Nachdem so der erste Übertragungsblock 5.1 an das zu testende Gerät übermittelt wurde, steht dem zu testenden Gerät eine Zeitspanne 10 zur Verfügung, um das empfangene Signal auszuwerten. Die Zeitspanne 10 weist eine minimale Länge auf, in der das empfangene Signal demoduliert und auf korrekte Übertragung überprüft wird. Um eine korrekte Übertragung festzustellen, kann z.B. eine sog. CRC-Summe verwendet werden (Cyclic Redundancy Check). Das Ergebnis dieses Tests wird von dem zu testenden Gerät zurück an das Testgerät übermittelt. Hierzu wird von dem zu testenden Gerät ein "ACK" bzw. "NACK"-Signal als positives bzw. als negatives Bestätigungssignal gesendet. Bei der normalen Übertragung von Daten wird in Abhängigkeit von einem positiven oder negativen Bestätigungssignal ACK bzw. NACK, das von einem Mobilfunkgerät beispielsweise zur Basisstation gesendet wird, ein Übertragungsblock mit neuen Daten gesendet oder das Senden eines bestimmten Übertragungsblocks wiederholt. Ein solches wiederholtes Senden eines Übertragungsblocks erfolgt bis zu einer bestimmten Anzahl von Wiederholungen. Eine Wiederholung erfolgt jedes Mal dann, wenn durch die Basisstation bezüglich eines bestimmten Übertragungsblocks ein negatives Bestätigungssignal "NACK" empfangen wurde. Die maximale Anzahl solcher Übertragungswiederholungen wird für die Übertragung eines bestimmten Datenstroms 1 festgelegt. Bei dem erfindungsgemäßen Verfahren wird für die zu einem bestimmten Prozess gehörenden Übertragungsblöcke die Anzahl der Wiederholungen individuell festgelegt, so dass unterschiedliche Prozesse unterschiedliche maximale Anzahlen von Wiederholungen haben können.

Ebenso kann festgelegt werden, ob die wiederholt zu übertragenden Daten in derselben Form wieder übertragen werden, oder aber in abgewandelter Form. Hierzu wird eine Sequenz von Redundanzversionen von der Basisstation festgelegt, so dass bereits zum Start des Prozesses eindeutig definiert ist, wievielfach und in welcher Redundanzversion Daten erneut in Übertragungsblöcken übertragen werden. Bei dem erfindungsgemäßen Verfahren erfolgt dies wiederum für die einzelnen Prozesse unabhängig voneinander.

In dem dargestellten Ausführungsbeispiel der Fig. 2 ist zu erkennen, dass der erste Übertragungsblock 7.1 des zweiten Signalrahmens 6 eine erneute Übertragung der Daten des ersten Übertragungsblocks 5.1 des ersten Signalrahmens 4 darstellt. Um das Testverfahren durchführen zu können, ohne dass eine Beeinflussung durch die tatsächliche Erkennungsgenauigkeit des zu testenden Geräts stattfindet, kann eine solche Wiederholung eines Übertragungsblocks z. B. auch dann erfolgen, wenn die ursprüngliche Sendung des Übertragungsblocks 5.1 und das anschließende Auswerten zu einem korrekten Ergebnis geführt haben und daher das zu testende Mobilfunkgerät eine "ACK"-Signal zurückgesendet hat. Dadurch lässt sich z.B. in Zusammenhang mit den jeweils verwendeten Redundanzversionen ermitteln, ob bestimmte Redundanzversionen eine abweichende Fehlerrate aufweisen.

Wie es bereits beschrieben wurde, wird zur Erkennung einer korrekten Übertragung eines Übertragungsblocks dem von dem Sender übertragenen Übertragungsblock eine CRC Prüfsumme als Prüfukriterium beigefügt. Um auch bei der Übertragung in guter Qualität das Abarbeiten einer Sequenz von Redundanzversionen zu erzwingen, kann die Basisstation gezielt ein nicht zu den Daten des Übertragungsblocks passendes Prüfkriterium beifügen. Auf diese Weise wird bei dem zu testenden Gerät 12 die Rücksendung eines oder mehrerer "NACKs" erzwungen. Zusätzlich zu dem gezielten Durchlaufen einer Sequenz von Redundanzversionen wird so außerdem überprüft, ob tatsächlich eine korrekte Zuordnung von positiven oder negativen Betätigungssignalen "ACKs" bzw. "NACKs" durch das zu testende Gerät erfolgt.

Zusätzlich zu dem positiven oder negativen Bestätigungssignal ACK bzw. NACK wird von dem zu testenden Gerät auch ein Indikator für die Kanalqualität an das Testgerät gesendet (CQI; Channel Quality Indicator). Der CQI ist ein Index in einer Liste von Transportformaten. Die Liste ist so geordnet, dass ein höheres CQI bei gleichem Kanal einer geringeren Energie pro übertragenem Datenbit entspricht. Das zu testende Gerät gibt mit dem CQI an, welches Transportformat es mit einer festgelegten Blockfehlerrate bei der gegenwärtigen Kanalqualität empfangen kann. Dementsprechend soll die Blockfehlerrate bei höherem als dem vom zu testenden Gerät gesendeten CQI höher als die festgelegte Blockfehlerrate sein und bei niedrigerem CQI niedriger.

Zur Ermittlung der Fehlerrate von einem zu testenden Gerät müssen in Abhängigkeit von der Verteilung der CQI's die Fehlerraten bei der Verwendung von Transportformaten ermittelt werden, die von einem mittleren CQI des zu testenden Geräts in einer bestimmten Weise abweichen. Das heißt, es wird zunächst die Verteilung der CQI's für ein bestimmtes Transportformat ermittelt. Für diese Verteilung wird ein mittlerer CQI bestimmt. Ausgehend von diesem mittleren CQI werden die Fehlerraten für ein einem bestimmten niedrigeren CQI sowie einem bestimmten höheren CQI entsprechenden Transportformat ermittelt. Da bei dem erfindungsgemäßen Verfahren für unterschiedliche Prozesse unterschiedliche Transportformate eingestellt werden können, kann diese Ermittlung der Fehlerraten bei niedrigeren CQI's bzw. höheren CQI's parallel durch entsprechende Konfiguration der nebenläufigen Prozesse erfolgen.

Der dargestellte Übertragungskanal HSDPA kann auch gleichzeitig mit einem Referenzmesskanal betrieben werden. Dieser Referenzmesskanal in Uplink und Downlink wird zusätzlich zum Kanal HSDPA betrieben. Damit lässt sich auf dem Referenzmesskanal eine Testschleife gleichzeitig mit dem beschriebenen Verfahren zur Bestimmung der Fehlerrate in dem Übertragungskanal HSDPA durchführen. Auf diese Weise lassen sich nicht nur eine Bitfehlerrate sowie eine Blockfehlerrate gleichzeitig bestimmen, sondern auch der Datendurchsatz auf der HSDPA-Übertragung. Auf diese Weise lässt sich der Einfluss der HSDPA-Übertragung auf Nicht-HSDPA-Übertragungskanäle messen. In Mobilfunksystem der dritten Generation werden z.B. Nicht-HSDPA-Kanäle zur Messung der Empfindlichkeit des Empfängers genutzt.

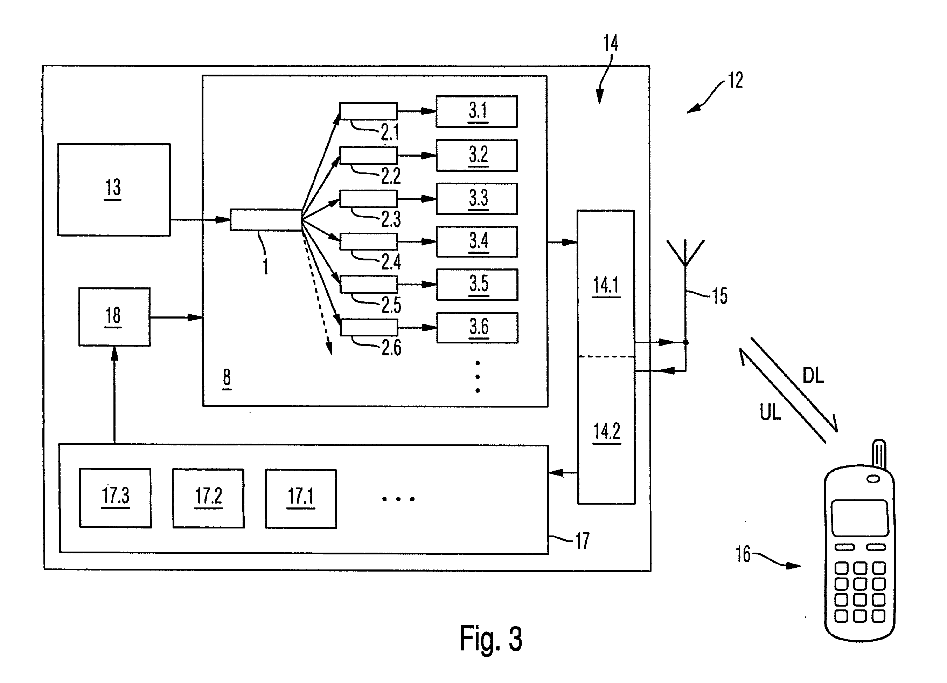

In der Fig. 3 ist ein erfindungsgemäßes Testgerät 12 als Blockschaltbild dargestellt. Das Testgerät 12 weist eine Datenquelle 13 auf, die zunächst einen Datenstrom erzeugt. Dieser Datenstrom wird an eine Signalgeneratoreinheit 8 weitergeleitet, die in bereits beschriebener Weise den Datenstrom 1 in mehrere Datenteilströme 2.1 bis 2.6 zerlegt. Die Datenteilströme 2.1 bis 2.6 werden durch Kodier- und Modulationsblöcke 3.1 bis 3.6 aufbereitet und in einem bestimmten Transportformat an eine Sende-/Empfangseinheit 14 weitergeleitet. Diese Sende-/Empfangseinheit 14 weist einen Sender 14.1 sowie einen Empfänger 14.2 auf. Die Sende-/Empfangseinheit 14 ist mit einer Antenne 15 verbunden und sendet die Datenteilströme 2.1, ... 2.6 in der bezüglich Fig. 2 erläuterten Art an ein zu testendes Gerät, im dargestellten Ausführungsbeispiel ein Mobilfunkgerät 16.

In der Fig. 3 ist die Übertragung der Daten mittels Funk dargestellt. Es ist jedoch ebenfalls möglich, eine kabelgebundene Verbindung zwischen dem Mobilfunkgerät 16 und dem Testgerät 12 zu verwenden, um entweder gezielt unterschiedliche Dämpfungsfaktoren überprüfen zu können, oder aber z. B. Störeinflüsse auf der Funkstrecke zu eliminieren.

Die von dem Mobilfunkgerät 16 zurückgesendeten positiven oder negativen Bestätigungssignale "ACK" bzw. "NACK" wurden ebenso wie der CQI werden seitens des Messgeräts von dem Empfänger 14.2 empfangen. Die positiven bzw. negativen Bestätigungssignale werden dann an eine Auswerteeinheit 17 weitergeleitet. In der Auswerteeinheit 17 sind in der Fig. 3 Auswerteblöcke 17.1, 17.2 und 17.3 oder mehr vorhanden, die jeweils einem bestimmten Übertragungsblock 5.i, 7.i eines jeweiligen Signalrahmens 4, 6 zugeordnet sind. So kann z.B. der Auswerteblock 17.1 jeweils die negativen bzw. positiven Bestätigungssignale zu den ersten Übertragungsblöcken 5.1., 7.1 usw. auswerten und damit eine Aussage über die Fehlerrate des ersten Prozesses bzw. des ersten Datenteilstroms 2.1 ermöglichen. Dem entsprechend ist der zweite Auswerteblock 17.2 den zweiten Übertragungsblöcken 5.2, 7.2 usw. zugewiesen. Der zweite Auswerteblock 17.2 ermittelt somit eine Fehlerrate für den zweiten Datenteilstrom 2.2. Dem entsprechend ist für die weiteren Datenteilströme 2.3 bis 2.6 jeweils ein eigener Auswerteblock 7.3, .... vorgesehen.

Um das jeweilige Transportformat für die Datenteilströme 2.1 bis 2.6 festzulegen, ist ein Konfigurationsblock 18 vorgesehen. Mittels des Konfigurationsblocks 18 wird festgelegt, welcher Prozess mit welcher Datenraten und welchem Modulationsverfahren an das zu testende Gerät gesendet wird. Da bei dem Testverfahren das Transportformat in Abhängigkeit von einem ermittelten mittleren CQI geändert werden muss, ist die Auswerteeinheit 17 mit dem Konfigurationsblock 18 verbunden. In Abhängigkeit von dem mittleren CQI, der in der Auswerteeinheit 17 ermittelt wird, weist der Konfigurationsblock 18 zumindest zwei Prozessen ein entsprechend geändertes Transportformat zu, das dem bestimmten niedrigeren CQI bzw. dem bestimmten höheren CQI entspricht.

Die Erfindung ist nicht auf das dargestellte Ausführungsbeispiel beschränkt. Insbesondere lassen sich beliebige Merkmale des Ausführungsbeispiels in beliebiger Weise miteinander kombinieren.

## Patentansprüche

1. Verfahren zum Bestimmen einer Fehlerrate bei einer Übertragung von Daten (1) in einem Mobilfunksystem mit zumindest einem Übertragungskanal, in dem mehrere Datenteilströme (2.1, ..., 2.6) übertragen werden, mit folgenden Verfahrensschritten:
- Erzeugen der mehreren Datenteilströme (2.1, ..., 2.6) durch eine Signalgeneratoreinheit (8),
- Festlegen von Transportformaten individuell für jeden Datenteilstrom (2.1, ..., 2.6),
- Senden der Datenteilströme (2.1, ..., 2.6) in jeweils einer Anzahl zusammengehörender Übertragungsblöcke (5.1, ..., 7.1) durch ein Testgerät (12) an ein zu testendes Gerät (16),
- Empfangen und Auswerten der Übertragungsblöcke (5.1, ..., 5,i, 7.1, ...) durch das zu testende Gerät (16) und Zurücksenden eines positiven oder negativen Bestätigungssignals (ACK, NACK) für jeden Übertragungsblock, und
**dadurch gekennzeichnet,**
**dass** zumindest eine Fehlerrate aus den empfangenen Bestätigungssignalen (ACK, NACK) aller Datenteilströme (2.1, ..., 2.6) durch das Testgerät (12) bestimmt wird.

2. Verfahren nach Anspruch 1,
**dadurch gekennzeichnet,**
**dass** für jeden Datenteilstrom (2.1, ..., 2.6) eine Fehlerrate aus den positiven und negativen Bestätigungssignalen (ACK, NACK) der zu diesem Datenteilstrom (2.1, ..., 2.6) gehörenden Übertragungsblöcken (5.1, 7.1; 5.2, 7.2; 6.3, 7.3, ...) bestimmt wird.

3. Verfahren nach Anspruch 1 oder 2,
**dadurch gekennzeichnet,**
**dass** zum Senden verschiedener Datenteilströme (2.1, ..., 2.6) unterschiedliche Modulationsverfahren (QPSK, QAM) verwendet werden.

4. Verfahren nach einem der Ansprüche 1 bis 3,
**dadurch gekennzeichnet,**
**dass** durch das Testgerät (12) individuell für jeden Datenteilstrom (2.1, ..., 2.6) eine maximale Anzahl von Übertragungswiederholungen derjenigen Übertragungsblöcke festgelegt wird, bei deren erstem Senden ein negatives Bestätigungssignal (NACK) zurück gesendet wird.

5. Verfahren nach einem der Ansprüche 1 bis 4,
**dadurch gekennzeichnet,**
**dass** durch das Testgerät (12) individuell für jeden Datenteilstrom (2.1, ..., 2.6) eine Sequenz der Redundanzversionen für wiederholt zu übertragende Übertragungsblöcke (5.1, ..., 5.i) festgelegt wird.

6. Verfahren nach Anspruch 4 oder 5,
**dadurch gekennzeichnet,**
**dass** die maximale Anzahl der Übertragungswiederholungen und/oder die Sequenz der Redundanzversionen für einen Datenteilstrom (2.1, ..., 2.6) jeweils unabhängig von zu den Übertragungsblöcken (5.1, ..., 5.i, 7.1, ...) dieses Datenteilstroms (2.1, ..., 2.6) zurückgesendeten positiven oder negativen Bestätigungssignalen (ACK, NACK) festgelegt wird.

7. Verfahren nach einem der Ansprüche 1 bis 6,
**dadurch gekennzeichnet,**
**dass** durch das Testgerät (12) zum Erzwingen zumindest eines negativen Bestätigungssignals (NACK) den in einem Übertragungsblock (5.1,..., 7.1,....) gesendeten Daten eine nichtübereinstimmende CRC Prüfsumme beigefügt wird.

8. Verfahren nach einem der Ansprüche 1 bis 7,
**dadurch gekennzeichnet,**
**dass** durch das Testgerät (12) gleichzeitig die Block- und Bitfehlerrate auf einem Referenzmesskanal bestimmt wird.

9. Testgerät zum Bestimmen einer Fehlerrate bei der Übertragung von Daten in einem Mobilfunksystem, wobei das Testgerät (12) eine Signalgeneratoreinheit (8) zum Erzeugen von mehreren Datenteilströmen (2.1, ..., 2.6), einen Konfigurationsblock (18) zum Festlegen von Transportformaten individuell für jeden Datenteilstrom (2.1, ..., 2.6), eine Sende-/Empfangseinheit zum Senden der Datenteilströme (2.1, ..., 2.6) in jeweils einer Anzahl zusammengehörender Übertragungsblöcke (5.1, 7.1; 5.2, 7.2; 5.3, 7.3; ...) und zum Empfangen eines positiven oder negativen Bestätigungssignals (ACK, NACK) aufweist,
**dadurch gekennzeichnet,**
**dass** das Testgerät (12) eine Auswerteeinheit (17) zum Bestimmen zumindest einer Fehlerrate aus den empfangenen Bestätigungssignalen (ACK, NACK) aller Datenteilströme (2.1, ..., 2.6) aufweist.

10. Testgerät nach Anspruch 9,
**dadurch gekennzeichnet,**
**dass** die Auswerteinheit (17) mehrere Auswerteblöcke (17.1, 17.2, 17.3) zur Bestimmung einer Fehlerrate für jeweils einem Datenteilstrom (2.1, ..., 2.6) aufweist.

11. Testgerät nach Anspruch 9 oder 10,
**dadurch gekennzeichnet,**
**dass** die Signalgeneratoreinheit (8) mehrere Signalgeneratoren (3.1, ..., 3.6) zur Erzeugung von Sendesignalen für Datenteilströme (2.1, ..., 2.6) mit gleichen oder unterschiedlichen Transportformaten für die einzelnen Datenteilströme aufweist.

12. Testgerät nach einem der Ansprüche 9 bis 11,
**dadurch gekennzeichnet,**
**dass** durch den Konfigurationsblock (18) eine maximale Anzahl von Übertragungswiederholungen einzelner Übertragungsblöcke (5.1, ..., 5.i) eines Datenteilstroms (2.1, ..., 2.6) nach einem negativen Bestätigungssignal (NACK) festlegbar ist.

13. Testgerät nach einem der Ansprüche 9 bis 12,
**dadurch gekennzeichnet,**
**dass** durch den Konfigurationsblock (18) eine Redundanzversion für die wiederholt zu übertragenden Übertragungsblöcke (5.1, ..., 5.i) der Datenteilströme (2.1, ..., 2.6) festlegbar ist.

14. Testgerät nach einem der Ansprüche 9 bis 13,
**dadurch gekennzeichnet,**
**dass** durch den Konfigurationsblock (18) die maximale Anzahl und/oder die Redundanzversion für einen Datenteilstrom (2.1, ..., 2.6) jeweils unabhängig von zu den Übertragungsblöcken (5.1, 7.1; 5.2, 7.2; 5.3, 7.3; ...) dieses Datenteilstroms (2.1, ..., 2.6) zurückgesendeten positiven oder negativen Bestätigungssignalen (ACK, NACK) festlegbar ist.

15. Testgerät nach einem der Ansprüche 9 bis 14,
**dadurch gekennzeichnet,**
**dass** durch die Übertragung und den Empfang eines Referenzmesskanals eine Block- und Bitfehlerrate bestimmt wird.

## Claims

1. A method for determining an error rate in a transmission of data (1) within a mobile radio system with at least one transmission channel, in which several partial data streams (2.1, ..., 2.6) are transmitted, with the following method steps:
- generation of several partial data streams (2.1, ..., 2.6) by a signal generator unit (8),
- specification of transport formats individually for each partial data stream (2.1, ..., 2.6),
- transmission of the partial data streams (2.1, ..., 2.6) in each case within a number of associated transmission blocks (5.1, ..., 7.1) from a test device (12) to a device under test (16),
- reception and evaluation of the transmission blocks (5.1, ..., 5.i, 7.1) by the device under test (16) and return of a positive or negative acknowledgement signal (ACK, NACK) for every transmission block, and
**characterised in that**
at least one error rate is determined by the test device (12) from the received acknowledgement signals (ACK, NACK) of all partial data streams (2.1, ..., 2.6) .

2. The method according to claim 1,
**characterised in that**,
for every partial data stream (2.1, ..., 2.6), an error rate is determined from the positive and negative acknowledgement signals (ACK, NACK) of the transmission blocks (5.1, 7.1; 5.2, 7.2; 6.3, 7.3 ...) associated with this partial data stream (2.1, ..., 2.6).

3. The method according to claim 1 or 2,
**characterised in that**,
for the transmission of different partial data streams (2.1, ..., 2.6), different modulation methods (QPSK, QAM) are used.

4. The method according to any one of claims 1 to 3,
**characterised in that**
a maximum number of transmission repetitions of those transmission blocks with whose first transmission a negative acknowledgement signal (NACK) is specified, is returned by the test device (12) individually for every partial data stream (2.1, ..., 2.6).

5. The method according to any one of claims 1 to 4,
**characterised in that**
a sequence of the redundancy versions for transmission blocks (5.1, ..., 5.i) to be transmitted repeatedly is specified by the test device (12) individually for every partial data stream (2.1, ..., 2.6).

6. The method according to claim 4 or 5,
**characterised in that**
the maximum number of transmission repetitions and/or the sequence of the redundancy versions for a partial data stream (2.1, ..., 2.6) is specified in each case independently of positive or negative acknowledgement signals (ACK, NACK) returned for the transmission blocks (5.1, ..., 5.i, 7.1 ...) of this partial data stream (2.1, ..., 2.6).

7. The method according to any one of claims 1 to 6,
**characterised in that**
a non-matching CRC checksum is added by the test device (12) to the data transmitted within a transmission block (5.1, ..., 7.1) in order to force at least one negative acknowledgement signal (NACK)

8. The method according to any one of claims 1 to 7,
**characterised in that**
the block error rate and the bit error rate are determined by the test device (12) at the same time on a reference measuring channel.

9. A test device for determining an error rate in the transmission of data in a mobile radio system, wherein the test device (12) provides a signal generator unit (8) for generating several partial data streams (2.1, ..., 2.6), a configuration block (18) for specifying transport formats individually for each partial data stream (2.1, ..., 2.6), a transmitter/receiver unit for transmitting the partial data streams (2.1, ..., 2.6) respectively in a number of associated transmission blocks (5.1, 7.1; 5.2, 7.2; 5.3, 7.3 ...) and for receiving a positive or negative acknowledgement signal (ACK, NACK),
**characterised in that**
the test device (12) provides an evaluation unit (17) for determining at least one error rate from the received acknowledgement signals (ACK, NACK) of all partial data streams (2.1, ..., 2.6).

10. The test device according to claim 9,
**characterised in that**
the evaluation unit (17) provides several evaluation blocks (17.1, 17.2, 17.3) for determining an error rate for each partial data stream (2.1, ..., 2.6).

11. The test device according to claim 9 or 10,
**characterised in that**
the signal generator unit (8) provides several signal generators (3.1, ..., 3.6) for generating transmission signals for partial data streams (2.1, ..., 2.6) with the same or different transport formats for the individual partial data streams.

12. The test device according to any one of claims 9 to 11,
**characterised in that**
a maximum number of transmission repetitions of individual transmission blocks (5.1, ..., 5.i) of a partial data stream (2.1, ..., 2.6) can be specified by the configuration block (18) after a negative acknowledgement signal (NACK).

13. The test device according to any one of claims 9 to 12,
**characterised in that**
a redundancy version can be specified by the configuration block (18) for the transmission blocks (5.1, ..., 5.i) of the partial data streams (2.1, ..., 2.6) to be transmitted repeatedly.

14. The test device according to any one of claims 9 to 13,
**characterised in that**
the maximum number and/or the redundancy version for a partial data stream (2.1, ..., 2.6) can be specified by the configuration block (18) in each case independently of positive or negative acknowledgement signals (ACK, NACK) returned for the transmission blocks (5.1, 7.1; 5.2, 7.2; 5.3, 7.3 ...) of this partial data stream (2.1, ..., 2.6).

15. The test device according to any one of claims 9 to 14,
**characterised in that**
a block error rate and a bit error rate are determined through the transmission and the reception of a reference measurement channel.

## Revendications

1. Procédé pour déterminer un taux d'erreurs lors d'une transmission de données (1) dans un système de téléphonie mobile comprenant au moins un canal de transmission, dans lequel plusieurs flux partiels de données (2.1, ..., 2.6) sont transmis, comprenant les étapes de procédé suivantes:
- génération des plusieurs flux partiels de données (2.1, ..., 2.6) par un générateur de signaux (8),
- définition de formats de transport individuellement pour chaque flux partiel de données (2.1, ..., 2.6),
- envoi des flux partiels de données (2.1, ..., 2.6) dans respectivement un certain nombre de blocs de transmission (5.1, ..., 7.1) cohérents par un appareil d'essai (12) à un appareil (16) à tester,
- réception et analyse des blocs de transmission (5.1, ..., 5.i, 7.1, ...) par l'appareil à tester (16) et renvoi d'un signal de confirmation (ACK, NACK) positif ou négatif pour chaque bloc de transmission, et
**caractérisé en ce**
**qu'**au moins un taux d'erreurs est déterminé à partir des signaux de confirmation (ACK, NACK) reçus de tous les flux partiels de données (2.1, ..., 2.6) par l'appareil d'essai (12).

2. Procédé selon la revendication 1,
**caractérisé en ce que**,
pour chaque flux partiel de données (2.1, ..., 2.6), un taux d'erreurs est déterminé à partir des signaux de confirmation (ACK, NACK) positifs et négatifs des blocs de transmission (5.1, 7.1; 5.2, 7.2; 6.3, 7.3, ...) appartenant à ce flux partiel de données (2.1, ..., 2.6).

3. Procédé selon la revendication 1 ou 2, **caractérisé en ce que**
différents procédés de modulation (QPSK, QAM) sont utilisés pour l'envoi de différents flux partiels de données (2.1, ..., 2.6).

4. Procédé selon l'une quelconque des revendications 1 à 3,
**caractérisé en ce**
**qu'**un nombre maximum de répétitions de transmission des blocs de transmission, lors du premier envoi desquels un signal de confirmation (NACK) négatif est renvoyé, est défini par l'appareil d'essai (12) individuellement pour chaque flux partiel de données (2.1, ..., 2.6).

5. Procédé selon l'une quelconque des revendications 1 à 4,
**caractérisé en ce**
**qu'**une séquence des versions de redondance pour des blocs de transmission (5.1, ..., 5.i) à transmettre de façon répétée est définie par l'appareil d'essai (12) individuellement pour chaque flux partiel de données (2.1, ..., 2.6).

6. Procédé selon la revendication 4 ou 5,
**caractérisé en ce que**
le nombre maximum des répétitions de transmission et/ou la séquence des versions de redondance pour un flux partiel de données (2.1, ..., 2.6) est défini à chaque fois indépendamment de signaux de confirmation (ACK, NACK) positifs ou négatifs renvoyés aux blocs de transmission (5.1, ..., 5.i, 7.1, ...) de ce flux partiel de données (2.1, .... 2.6).

7. Procédé selon l'une quelconque des revendications 1 à 6,
**caractérisé en ce**
**qu'**une somme d'essai CRC non concordante est jointe par l'appareil d'essai (12) aux données envoyées dans un bloc de transmission (5.1, ..., 7.1) pour forcer au moins un signal de confirmation (NACK) négatif.

8. Procédé selon l'une quelconque des revendications 1 à 7,
**caractérisé en ce que**
le taux d'erreurs sur les blocs et le taux d'erreurs sur les bits sont déterminés simultanément par l'appareil d'essai (12) sur un canal de mesure de référence.

9. Appareil d'essai destiné à déterminer un taux d'erreurs lors de la transmission de données dans un système de téléphonie mobile, l'appareil d'essai (12) présentant un générateur de signaux (8) pour générer plusieurs flux partiels de données (2.1, ..., 2.6), un bloc de configuration (18) pour fixer des formats de transport individuellement pour chaque flux partiel de données (2.1, ..., 2.6), une unité d'émission/de réception pour l'envoi des flux partiels de données (2.1, ..., 2.6) dans respectivement un certain nombre de blocs de transmission (5.1, 7.1; 5.2, 7.2; 5.3, 7.3, ...) cohérents et pour la réception d'un signal de confirmation (ACK, NACK) positif ou négatif,
**caractérisé en ce que**
l'appareil d'essai (12) présente une unité d'analyse (17) pour déterminer au moins un taux d'erreurs à partir des signaux de confirmation (ACK, NACK) reçus de tous les flux partiels de données (2.1, ..., 2.6).

10. Appareil d'essai selon la revendication 9,
**caractérisé en ce que**
l'unité d'analyse (17) présente plusieurs blocs d'analyse (17.1, 17.2, 17.3) pour déterminer un taux d'erreurs pour respectivement un flux partiel de données (2.1, ..., 2.6).

11. Appareil d'essai selon la revendication 9 ou 10,
**caractérisé en ce que**
le générateur de signaux (8) présente plusieurs générateurs de signaux (3.1, ..., 3.6) pour générer des signaux d'émission pour des flux partiels de données (2.1, ..., 2.6) avec des formats de transport identiques ou différents pour les flux partiels de données individuels.

12. Appareil d'essai selon l'une quelconque des revendications 9 à 11,
**caractérisé en ce**
**qu'**un nombre maximum de répétitions de transmission de blocs de transmission (5.1, ..., 5.i) individuels d'un flux partiel de données (2.1, ..., 2.6) peut être défini par le bloc de configuration (18) après un signal de confirmation (NACK) négatif.

13. Appareil d'essai selon l'une quelconque des revendications 9 à 12,
**caractérisé en ce**
**qu'**une version de redondance peut être définie par le bloc de configuration (18) pour les blocs de transmission (5.1, ..., 5.i) à transmettre de façon répétée des flux partiels de données (2.1, ..., 2.6).

14. Appareil d'essai selon l'une quelconque des revendications 9 à 13,
**caractérisé en ce que**
le nombre maximum et/ou la version de redondance pour un flux partiel de données (2.1, ..., 2.6) peut être défini par le bloc de configuration (18) à chaque fois indépendamment de signaux de confirmation (ACK, NACK) positifs ou négatifs renvoyés aux blocs de transmission (5.1, 7.1; 5.2, 7.2; 5.3, 7.3, ...) de ce flux partiel de données (2.1, ..., 2.6).

15. Appareil d'essai selon l'une quelconque des revendications 9 à 14,
**caractérisé en ce**
**qu'**un taux d'erreurs sur les blocs et un taux d'erreurs sur les bits sont déterminés par la transmission et la réception d'un canal de mesure de référence.
